# EUROPEAN PATENT APPLICATION

(11) **EP 2 202 664 A1**
(43) Date of publication of application: **30.06.2010**
(21) Application number: 08306003.8
(22) Date of filing: 23.12.2008
(51) Int. Cl.: G06F 21/24

(54) **Method of protection of data during the execution of a software code in an electronic device**

(71) Applicant: Gemalto SA, 92190 Meudon (FR)
(72) Inventor: Le - Cardinal, Daniel, 83860 Nans les pins (FR); Gauteron, Laurent, 13700 Marignane (FR)

(57) **Abstract**

The invention is a method of protecting a data intended to be accessed by an operating system embedded in an electronic device. The operating system is intended to manage an object comprising a header and a body. The data is stored in the body. The object is recorded in a memory of the electronic device. The electronic device comprises a memory manager able to provide access to the memory. The memory manager forbids the operating system to access the body as long as a preset action has not been successfully performed

## Description

### (Field of the invention)

The present invention relates to methods of protection of data during the execution of a software code in an electronic device. It relates particularly to methods of protection of sensitive data intended to be accessed by an object-oriented system during the execution of a service.

### (Prior art)

Electronic devices are machines comprising a memory, a microprocessor and an operating system for computing treatments. In general, electronic devices comprise a plurality of memories of different types. For example, they may comprise memory of RAM, ROM, EEPROM or Flash type. For example, personal computers, portable electronic tokens with limited resources and smart are electronic devices.

In electronic device domain, an object is a container of data. An object is made of two parts: a header and a body. Usually the header comprises pieces of information related to object and body nature.

When the operating system is running it has privileged rights which allow accessing the data stored in the memory of the electronic device. In particular, the operating system may freely access objects in which data is stored. The operating system may be corrupted by a hacker in order to dump the content of a memory of the electronic device. In particular, the operating system may be corrupted by fault injections or software attacks. In such a case, a hacker may take advantage of the fact that the operating system has all access rights for accessing objects in the memory. Thus a problem is to prevent the access to data stored in a memory of an electronic device when the object-oriented system is corrupted.

### (Summary of the Invention)

An object of the invention is to solve the above mentioned technical problem.

The object of the present invention is a method for protecting a data intended to be accessed by an object-oriented system embedded in an electronic device. The object-oriented system is intended to manage an object comprising a header and a body. The object is recorded in a memory. The electronic device comprises a memory manager capable of providing access to the memory. The data is stored in the body. The memory manager forbids the object-oriented system to access the body as long as a preset action has not been performed.

A mapping may comprise zero up to several memory segments. Advantageously, the memory manager may be capable of managing first and second mappings, wherein the first mapping comprises the header and the second mapping comprises the body. The preset action may be the activation of the second mapping in the memory manager.

Alternatively, the memory manager may be capable of managing a mapping comprising first and second segments, wherein a first access right is associated to the first segment and a second access right is associated to the second segment. The first segment may comprise the header and the second segment may comprise the body, and the preset action may be the update of the second access right.

Advantageously, the access to the header may be always authorized to the object-oriented system by the memory manager.

Alternatively, the access to the header may be forbidden to the object-oriented system by the memory manager when the access to the body is authorized to the object-oriented system.

The object-oriented system may be an operating system.

Advantageously, the electronic device may comprise an object-oriented virtual machine intended to access said object.

Another object of the invention is an electronic device comprising a memory and an operating system intended to manage an object. The object comprises a header and a body. The object is recorded in the memory. The electronic device comprises an object-oriented virtual machine and a memory manager capable of providing access to said memory. The memory manager is capable of managing first and second mappings. The first mapping comprises the header and the second mapping comprises the body. The electronic device comprises a means capable of activating the second mapping. The triggering of the means is required by the running of a service which is used by the object-oriented virtual machine.

Another object of the invention is an electronic device comprising a memory and an operating system intended to manage an object. The object comprises a header and a body. The object is recorded in the memory. The electronic device comprises an object-oriented virtual machine and a memory manager capable of providing access to said memory. The memory manager is capable of managing a mapping comprising first and second segments. A first access right is associated to the first segment and a second access right is associated to the second segment. The first segment comprises the header and the second segment comprises the body. The electronic device comprises a means capable of updating the second access right. The triggering of the means is required by the running of a service which is used by the object-oriented virtual machine.

In a preferred embodiment, the electronic device may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of an electronic device of smart card type according to the invention;
- Figure 2 depicts schematically an example of memory structure with a first mapping according to the invention;
- Figure 3 depicts schematically an example of memory structure with a second mapping according to the invention; and
- Figure 4 depicts schematically an example of memory structure with a third mapping according to the invention.

### (Detailed description of the preferred embodiments)

The invention may apply to any types of electronic device comprising an object-oriented system intended to manage an object comprising a header and a body.

The present invention relies on the fact that a specific component, called memory manager, is in charge of the memory access. The object-oriented system accesses the memory through a memory manager that checks if the relevant rights have been granted.

An advantage of the invention is to protect access to data recorded in the body part of objects that are stored in a memory of an electronic device.

Another advantage of the invention is to provide a secured solution for protecting access to data with a very low impact on speed performances. The memory manager may be hardware Memory Management Unit (MMU) which performs very fast treatments.

Another advantage of the invention is to keep the usual format of object. In particular there is no need to insert additional data, like a checksum, in the header.

Another advantage of the invention is to avoid the ciphering of the object content. In particular, the invention avoids losing time in ciphering/deciphering operations which are complex treatments.

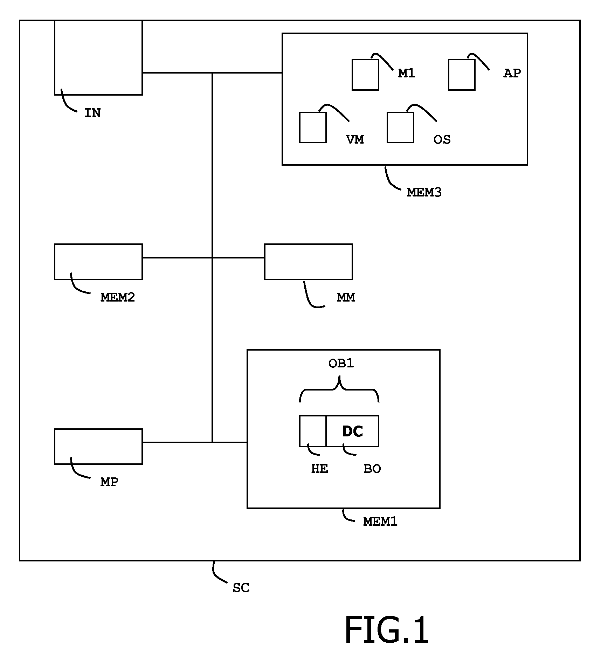

**Figure 1** shows the architecture of an electronic device SC of smart card type according to a preferred embodiment of the invention. In this example, the electronic device SC is a Java Card ®.

The electronic device SC comprises a working memory MEM2 of RAM type, two non volatile memories MEM1 and MEM3, a microprocessor MP, a memory manager MM and a communication interface IN. The non volatile memory MEM3 comprises an operating system OS, an object-oriented virtual machine VM, an application AP compiled in intermediate code and a means M1. The application AP is intended to be run by the virtual machine VM. The memory manager MM is a Memory Management Unit implemented in a hardware component.

Alternatively, the memory manager MM may be a software component.

The memory manager MM is in charge of the memory MEM1 management. The memory manager MM manages the memory MEM1 through a technique called mapping. The mapping defines a set of memory segments which can be accessed. A memory segment is a set of memory cells having successive addresses comprised in a limited range. Usually a memory comprises several segments. A mapping may comprise a first segment belonging to a first memory and a second segment belonging to another memory. Usually a mapping comprises one or several memory segments. A mapping may also be empty and comprise no segment. The memory manager MM is capable of managing several mappings. In a preferred embodiment the memory manager MM manages only one current mapping.

The non volatile memory MEM1 comprises an object OB1 having a header HE and a body BO. A sensitive data DC is stored in the body BO.

Alternatively, the object OB1 may be stored in the working memory MEM2. In such a case, the object OB1 is stored in RAM memory.

The two memories MEM1 and MEM3 may be implemented as any combinations of one, two or more memories. These memories may be NAND flash or EEPROM memory or another type of non volatile memory.

In a preferred embodiment, the means M1 is implemented as an applet. The applet M1 is capable of activating a mapping in the memory manager MM.

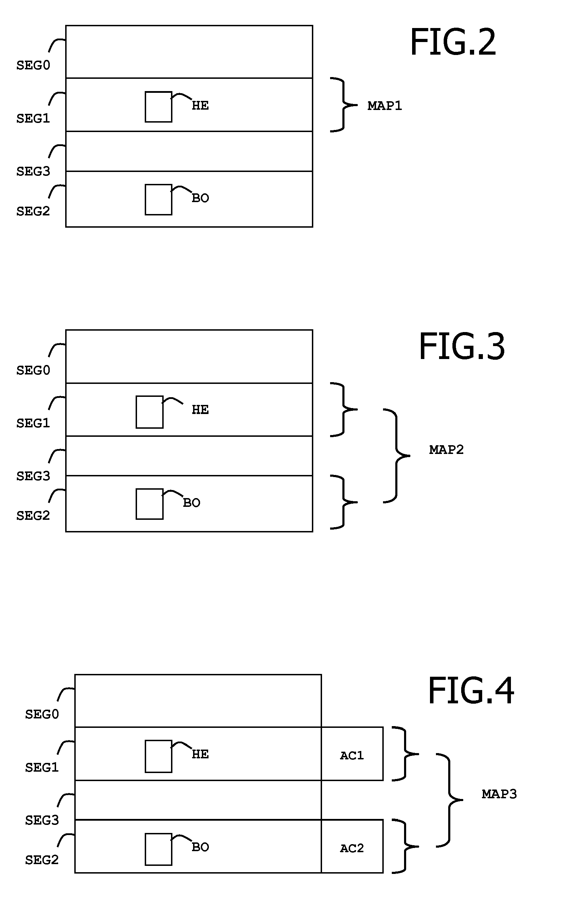

**Figure 2** shows a first mapping MAP1 intended to be used by the memory manager MM. The memory MEM1 is assumed to be shared in four segments SEG0, SEG1, SEG2 and SEG3. The mapping MAP1 comprises the memory segment SEG1 only.

The header HE is stored in the segment SEG1 and the body BO is stored in the segment SEG2. Thus the object OB1 is stored through two distinct memory segments. When the mapping MAP1 is active, the operating system OS can access to the memory segment SEG1 only. Thus when the mapping MAP1 is the current mapping, the operating system OS can access the header HE of the object OB1 and the operating system OS cannot access the body BO of the object OB1. Thanks to the mapping MAP1, the memory manager MM hides the body BO from the operating system OS.

**Figure 3** shows a second mapping MAP2 intended to be used by the memory manager MM. The mapping MAP2 comprises the two memory segments SEG1 and SEG2.

The header HE is stored in the segment SEG1 and the body BO is stored in the segment SEG2. When the mapping MAP2 is activated, the operating system OS can access both memory segments SEG1 and SEG2. When the current mapping is the mapping MAP2, the operating system OS can access both the header HE and the body BO of the object OB1.

In the two mappings MAP1 and MAP2 of Figures 1 and 2, the memory segments SEG1 and SEG2 are supposed to be in free access. In other words, access conditions associated to SEG1 and SEG2 are set to "always" or assumed to be always granted.

**Figure 4** shows a third mapping MAP3 intended to be used by the memory manager MM. The mapping MAP3 comprises the two memory segments SEG1 and SEG2.

The header HE is stored in the segment SEG1 and the body BO is stored in the segment SEG2. A first access rights AC1 is associated to the memory segment SEG1 and a second access rights AC2 is associated to the memory segment SEG2. The memory segment SEG1 is supposed to be in free access. In a first state, the access rights AC2 of the memory segment SEG2 is set to "ever". In a second state, the access rights AC2 is set to "always". Advantageously, access rights of each segment may be detailed for "read", "write" and "execute" operations. When the mapping MAP3 is set to the first state, the operating system OS can access the header HE of the object OB1 and the operating system OS cannot access the body BO of the object OB1. When the mapping MAP3 is set to the second state, the operating system OS can access both the header HE and the body BO of the object OB1.

Whatever the state of the mapping MAP3 is, both segments SEG0 and SEG3 cannot be reached by the operating system OS since these two memory segments does not belong to the mapping MP3. Although, the segment SEG2 belongs to the mapping MAP3, the memory segment SEG2 may be reached by the operating system OS only when the corresponding access rights have been granted.

In this embodiment, the applet M1 is capable of updating the access rights AC2 associated to the memory segment SEG2 belonging to the current mapping. In other words, the applet M1 is capable of granting the access rights AC2.

The virtual machine VM may be seen has a part of the operating system OS or as a component distinct from the operating system OS. In both cases, access to the header HE and to the body BO by the virtual machine VM is managed in way identical to the operating system OS. The virtual machine VM has privileged rights. In particular the virtual machine VM may have supervisor rights authorizing access to every object at the Java Runtime Environment level. In accordance with the current mapping and with the current access rights of the segments, the access to a memory segment may be authorized or not to the virtual machine VM. Thus the memory manager may be dynamically customized in order to authorize the virtual machine VM to access or not the body BO of the object OB1.

If a malicious virtual machine or a malicious operating system tries to access a sensitive data stored in a body according to the invention, the memory manager MM forbids the access to the sensitive data.

Alternatively, the mapping MAP2 may contain the segment SEG2 only. Thus when the current mapping is the mapping MAP2, the access to the body BO is allowed and the access to the header HE is forbidden.

Alternatively, the header HE and the body BO may be stored in two distinct memories. In such an embodiment, the mapping comprises segments belonging to distinct memories.

Advantageously, the protection method according to the invention may be applied to a subset of all objects managed by the operating system. For example the protection method may be only applied to objects whose bodies contain sensitive data. Alternatively the protection method may be applied to objects whose bodies contain non-sensitive data.

During the running of the application AP by the virtual machine VM, an access to the object OB1 may be required. The virtual machine VM uses a specific service in order to carry out the running of the application AP. The service corresponding to the targeted operation triggers the means M1 which activates the relevant mapping MAP2 in the memory manager MM. The service is invoked by the virtual machine VM. For example the service may correspond to a crypto treatment or an I/O treatment.

Advantageously, the means M1 may be merged in the operating system OS.

Alternatively, the virtual machine VM may be compliant with the .Net ® framework.

In the above-described examples the activation of a new mapping leads to the automatic deactivation of the previous current mapping. In other words, the activation of a new mapping corresponds to the switching from a previous mapping to a new one.

Alternatively, the memory manager may be able to manage two current mappings. In such a case, the activation of a new mapping does not deactivate the previously current mapping.

## Claims

1. A **method** for protecting a data (DC) intended to be accessed by an object-oriented system (OS) embedded in an electronic device (SC), said object-oriented system (OS) being intended to manage an object (OB1) comprising a header (HE) and a body (BO), said object (OB1) being recorded in a memory (MEM1), the electronic device (SC) comprising a memory manager (MM) able to provide access to said memory (MEM1), said data (DC) being stored in the body (BO),
**characterized in that** the memory manager (MM) forbids the object-oriented system (OS) to access the body (BO) as long as a preset action has not been performed.

2. A method according to claim 1, wherein a mapping comprises zero up to several memory segments, wherein said memory manager (MM) is able to manage first and second mappings (MAP1, MAP2), wherein the first mapping (MAP1) comprises the header (HE) and the second mapping (MAP2) comprises the body (BO), and wherein said preset action is the activation of the second mapping (MAP2) in the memory manager (MM).

3. A method according to claim 1, wherein a mapping comprises zero up to several memory segments, wherein said memory manager (MM) is able to manage a mapping (MAP3) comprising first and second segments (SEG1, SEG2), wherein a first access right (AC1) is associated to the first segment (SEG1) and a second access right (AC2) is associated to the second segment (SEG2), wherein the first segment (SEG1) comprises the header (HE) and the second segment (SEG2) comprises the body (BO), and wherein said preset action is the update of the second access right (AC2).

4. A method according to any one of claims 1 to 3, wherein the access to said header (HE) is always authorized to the object-oriented system (OS) by the memory manager (MM).

5. A method according to any one of claims 1 to 3, wherein the access to said header (HE) is forbidden to the object-oriented system (OS) by the memory manager (MM) when the access to said body (BO) is authorized to the object-oriented system (OS).

6. A method according to any one of claims 1 to 5, wherein said object-oriented system (OS) is an operating system.

7. A method according to any one of claims 1 to 6, wherein said electronic device (SC) comprises an object-oriented virtual machine intended to access said object (OB1).

8. A method according to any one of claims 1 to 7, wherein said electronic device (SC) is a smart card.

9. An **electronic device** (SC) comprising a memory (MEM1) and an operating system (OS) intended to manage an object (OB1) comprising a header (HE) and a body (BO), said object (OB1) being recorded in the memory (MEM1), the electronic device (SC) comprising an object-oriented virtual machine (VM) and a memory manager (MM) able to provide access to said memory (MEM1), a mapping being defined as a set of zero up to several memory segments, said memory manager (MM) being able to manage first and second mappings (MAP1, MAP2),
**characterized in that** the first mapping (MAP1) comprises the header (HE) and the second mapping (MAP2) comprises the body (BO), **in that** the electronic device (SC) comprises a means (M1) able to activate the second mapping (MAP2) and **in that** the triggering of said means (M1) is required by the running of a service which is used by the object-oriented virtual machine (VM).

10. An **electronic device** (SC) comprising a memory (MEM1) and an operating system (OS) intended to manage an object (OB1) comprising a header (HE) and a body (BO), said object (OB1) being recorded in the memory (MEM1), the electronic device (SC) comprising an object-oriented virtual machine (VM) and a memory manager (MM) able to provide access to said memory (MEM1), a mapping being defined as a set of zero up to several memory segments, said memory manager (MM) being able to manage a mapping (MAP3) comprising first and second segments (SEG1, SEG2), a first access right (AC1) being associated to the first segment (SEG1) and a second access right (AC2) being associated to the second segment (SEG2),
**characterized in that** the first segment (SEG1) comprises the header (HE) and the second segment (SEG2) comprises the body (BO), **in that** the electronic device (SC) comprises a means (M1) able to update the second access right (AC2), and **in that** the triggering of said means (M1) is required by the running of a service which is used by the object-oriented virtual machine (VM).

11. An electronic device (SC) according to any one of claims 9 to 10, wherein said electronic device (SC) is a smart card.
